# EUROPEAN PATENT SPECIFICATION

(11) **EP 3 723 492 B1**
(45) Date of publication and mention of the grant of the patent: **27.10.2021**
(21) Application number: 18819055.7
(22) Date of filing: 07.12.2018
(51) Int. Cl.: A23D 9/007, A23D 9/05, A21D 2/16, A21D 10/00, A23P 10/35

(54) **COMPOSITION COMPRISING POWDERED FATTY ACID GLYCERIDE**
ZUSAMMENSETZUNG MIT EINEM PULVERFÖRMIGEN FETTSÄUREGLYCERID
COMPOSITION COMPRENANT UN GLYCÉRIDE D'ACIDE GRAS EN POUDRE

(30) Priority: 11.12.2017 US 201762597107 P
(43) Date of publication of application: 21.10.2020
(73) Proprietor: DuPont Nutrition Biosciences ApS, 1411 Copenhagen K (DK)
(72) Inventor: BOUTTE, Troy, Thomas, New Century, Kansas 66031 (US); NEDDERSEN, John, P, New Century, Kansas 66031 (US)
(74) Representative: DuPont EMEA
(86) International application number: PCT/EP2018/083983
(87) International publication number: WO 2019/115388

(56) References cited:
- EP-A1- 0 153 870
- WO-A2-2007/042045
- US-A- 3 743 512
- US-A- 4 737 369
- US-A- 5 959 128
- US-A1- 2004 121 002

## Description

### FIELD OF THE INVENTION

The present invention relates to a dry powder composition comprising fatty acid glycerides, a bakery pre-mix comprising the composition, a method of making the composition and its use to make bakery products.

### BACKGROUND OF THE INVENTION

Fatty acid glycerides such as monoglycerides are used in baked goods mainly to improve the softness and shelf life of baked goods, but also to improve the fineness of the crumb structure and baked volume. Monoglycerides are made from a wide variety of oils, fats or fatty acids resulting in products that range from being soft pastes at room temperature to being solids with melting points of 70°C or greater. Commercial monoglycerides are usually mixtures containing varying proportions of glycerol monostearate, glycerol monopalmitate, glycerol monooleate, glycerol monolinoleate and glycerol monolinolenate. Glycerol monoelaidate is the trans version of glycerol monooleate and was commonly found in monoglycerides for bread until trans fats were banned.

Monoglycerides are often classified based on their iodine value which is a measure of the degree of saturation of the fatty acids used to manufacture the product. The iodine value is based on absorption of iodine by the double bonds found in unsaturated fatty acids. Therefore, an iodine value of 0-3 indicates a high proportion of fully saturated monoglycerides such as glycerol monostearate. These products are very hard solids at room temperature. Monoglycerides with iodine values of approximately 80 or higher have high proportions of glycerol monooleate, glycerol monolinoleate or glycerol monolinolenate. Commercial monoglycerides have iodine values up to about 110 and products in this iodine value range are soft pastes at room temperature. Monoglycerides that do not contain trans fatty acids, with iodine values roughly between 20 and 60 cannot be spray chilled into powders, so are typically sold as solid masses which are very difficult to scale and use.

Monoglycerides have two major modes of action in bakery products. The first function is coating the surface of starch granules during dough mixing. Monoglycerides are surface active materials and will tend to migrate to any available surface or interface including starch granules. Monoglycerides will orient the fatty portion of the molecule away from water and the glycerol portion of the molecule towards water or other polar materials. The coating of starch granules reduces the ability of water to enter the starch granule when the starch is heated during the baking process and also reduces the amount of amylose that leaches from the starch granule during heating. This is important since amylose recrystallizes during the first few days after baking resulting in firming of the baked good. This is the first phase of what is commonly referred to as staling. The amylose in the interstitial space between starch granules is very important since it acts as an adhesive between the starch granules. This results in a network that runs through the entire baked good negatively impacting eating quality. Therefore, it is very helpful to minimize the amount of amylose released from the starch granule.

The second function of monoglycerides is to act as a starch complexing agent for any amylose that is released into the interstitial space. The fatty acid portion of monoglycerides is nonpolar, or oil soluble, and prefers to be in a nonpolar environment. Amylose, while composed of a chain of glucose, which is polar, can twist itself into a helix which orients the carbon and hydrogen portions of the glucose toward the fatty acid while orienting the hydroxyl groups of the glucose toward the water phase of the dough. The interior of this helix is nonpolar and therefore can accept the fatty portion of the monoglyceride. This results in a complex of amylose wrapped around monoglyceride which is insoluble in water. The complex does not cocrystallize with other amylose molecules and disrupts the adhesive network. The ultimate effect is that the baked good is softer immediately after baking and this improvement in softness is retained during the shelf life of the product. However, not all monoglycerides are equally effective at complexing amylose. The internal geometry of the amylose helix is linear and therefore monoglycerides with straight chain fatty acids such as glycerol monostearate and glycerol monopalmitate are generally considered the best starch complexers. Unsaturated monoglycerides such as glycerol monooleate are angled due to the presence of double bonds and therefore are very poor starch complexing agents.

While saturated monoglycerides are the most effective at starch complexing they are very difficult to disperse in doughs due to their high melting points and very solid nature. Therefore, a lot of effort has gone into developing ways to get saturated monoglycerides to disperse quickly and easily into bakery doughs. One method of dispersing high melting point monoglycerides is to disperse them into bakery shortenings. Approximately 2-8% of the monoglycerides are added to a molten oil mixture that is then processed into a shortening that is easily dispersed into bakery doughs. Under these conditions, the monoglycerides are completely dispersed and highly effective as emulsifiers and starch-complexing agents. Modern bread bakeries, however, use liquid oils rather than shortening. Therefore, this approach does not work in many yeast-raised bakery applications.

Another method of dispersing monoglycerides is to first disperse the high melting point monoglyceride into water, forming what is referred to as a hydrated monoglyceride or hydrate. Hydrates are produced in several ways but involve melting the monoglyceride and combining with heated water under high shear. The product is then homogenized and cooled resulting in a product with a soft pasty consistency. Hydrates are sometimes considered the most functional form of monoglycerides but have several drawbacks. Hydrates are difficult to scale and often result in very messy work conditions including slippery floors. They also contain approximately 50-75% water and are therefore not efficient logistically. Hydrates are also susceptible to mold growth and must contain acids and antimicrobials which require labeling. Last, hydrates cannot be added to dry bakery mixes since they destroy the powder quality of these products.

Another form of monoglycerides is the powdered "dispersible" monoglyceride. These products are pure monoglycerides and are based on combinations of saturated, unsaturated and trans-fatty acids resulting in a monoglyceride that will slowly hydrate in a dough giving better dispersion. Most of these products relied heavily on trans-fatty acids such as elaidic acid which has an intermediate melting point and is also a good starch complexing agent. The glycerol monoelaidate made up as much as 40% of these products. While trans fats are still allowed in monoglycerides, most commercial bakeries do not want to use these products. The newer trans-free powdered monoglycerides are not as effective without the high trans fatty acid content. All of the dispersible monoglycerides present difficulties with handling primarily in summer months due to their content of unsaturated fatty acids.

Yet another form of monoglycerides is a spray-dried version. These products are made by forming an emulsion containing monoglycerides, corn syrup solids, milk solids and other ingredients and spray drying to a fine powder. These products are very dispersible and functional.

A method for making powdered monoglycerides is disclosed in the prior art document US 4,748,027. According to the teachings of this patent, an extrusion process is used to coat emulsifiers on starch, fiber or flour carriers. Although claiming up to an emulsifier loading content of up to 60%, the powder quality at only 40% emulsifier is described as greasy indicating poor quality.

In US Patent 3,743,512 a process for producing powdered monoglycerides is disclosed by which the monoglyceride is coated onto wheat starch using a high impact mill. The patent teaches that up to 50% of a fully saturated monoglyceride can be coated onto wheat starch.

In WO 2007/042045 A2 a process is disclosed for producing powdered emulsifier involving extrusion with rice flour. The process requires the addition of salts and the maximum loading capacity of emulsifier by example is 35%.

None of the prior art documents claim the degree of unsaturation or maximum loading capacity of the emulsifier. The current application provides an improved method for producing powdered monoglycerides allowing the use of more unsaturated monoglycerides at up to 90% loading with only 10% carrier. This results in a much more economical process as compared to the prior art while still providing high powder quality and flowability.

### SUMMARY OF THE INVENTION

It is an object of the present invention to provide fatty acid glycerides as a free-flowing powder which is convenient to use and highly dispersible in bakery doughs for improving crumb softness and prolonging the shelf-life of baked goods comprising the powder.

Accordingly, in one aspect the present invention relates to a composition in the form of a dry powder comprising particles of a carrier material coated with a fatty acid glyceride comprising 30-100% by weight monoglyceride, wherein the fatty acid glyceride comprises 30-90% by weight of the composition.

### BRIEF DESCRIPTION OF THE DRAWINGS

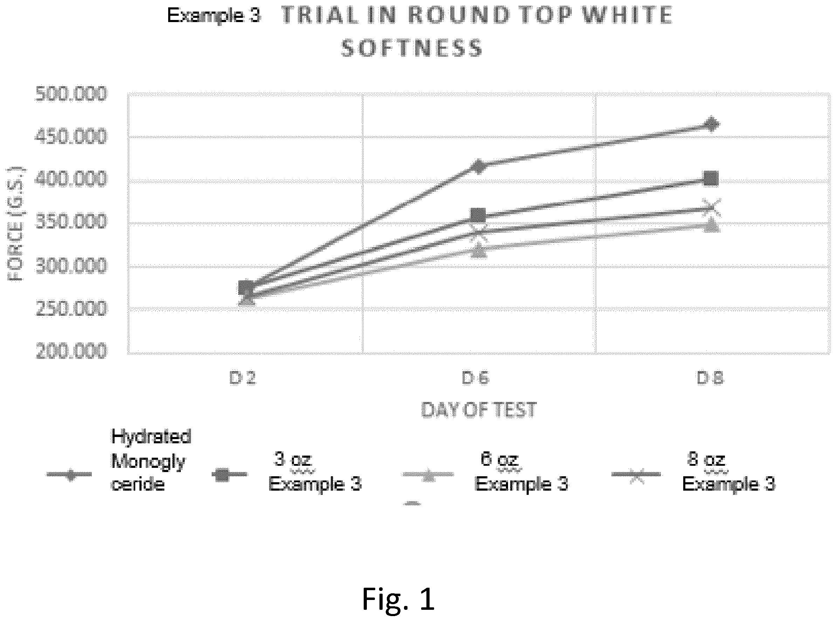

Fig. 1 is a graph showing the results of texture analysis using a TAXT2 texture analyser. The y axis represents the amount of force required to compress the bread crumb at different time points (shown on the x axis) in bread made using different quantities of the composition of Example 3 below compared to a control.

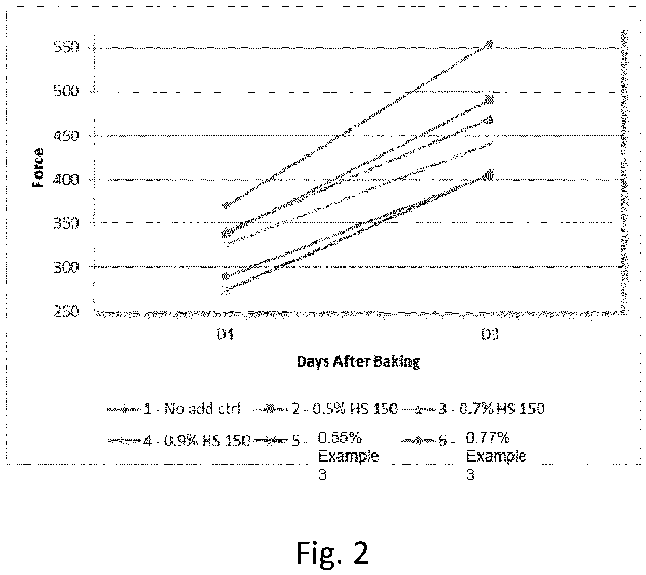

Fig. 2 is a graph showing the results of texture analysis using a TAXT2 texture analyser. The y axis represents the amount of force required to compress the bread crumb at two different time points (shown on the x axis) in bread made using different quantities of the composition of Example 3 below compared to different quantities of a standard commercial monoglyceride as a control.

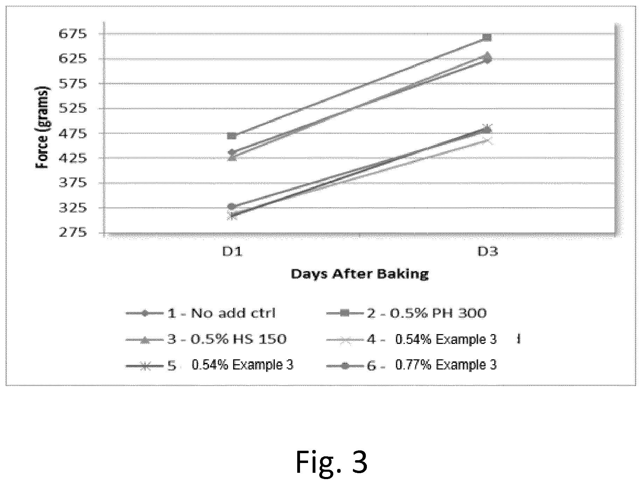

Fig. 3 is a graph showing the results of texture analysis using a TAXT2 texture analyser. The y axis represents the amount of force required to compress the bread crumb at two different time points (shown on the x axis) in bread made using different quantities of the composition of Example 3 below compared to two different commercial monoglycerides (with and without trans-fatty acids) as controls.

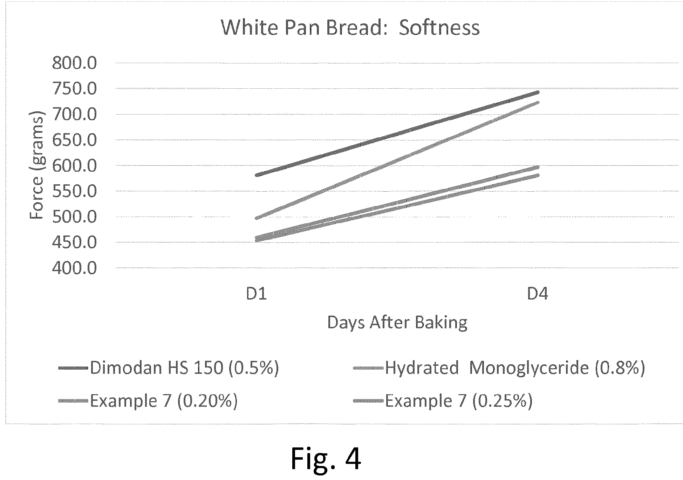

Fig. 4 is a graph showing the results of texture analysis using a TAXT2 texture analyser. The y axis represents the amount of force required to compress the bread crumb at two different time points (shown on the x axis) in bread made using different quantities of the composition of Example 7 below compared to Dimodan HS 150 and Hydrated Monoglyceride as controls.

### DETAILED DESCRIPTION OF THE INVENTION

In one embodiment, the fatty acid glyceride comprises 45-97% by weight monoglyceride, and in a currently preferred embodiment, the fatty acid glyceride comprises 93-97% by weight monoglyceride.

The monoglyceride included in the present composition may have an iodine value in the range of 30-120. The iodine value is a measure of the degree of saturation of the fatty acid in the monoglyceride such that an iodine value of 0-3 indicates that the monoglyceride includes a high proportion of fully saturated fatty acids. The iodine value may be determined by a method which involves reacting the monoglyceride with iodine chloride and back titration with sodium thiophosphate. In a currently preferred embodiment, the iodine value of the monoglyceride is in the range of 40-60 (a so-called intermediate iodine value). Monoglycerides in the intermediate iodine value range are soft pastes at room temperature and cannot be spray chilled into powders, and are therefore difficult to scale and use in bakeries. However, this problem has been overcome by the present invention where coating of the carrier particles with molten fatty acid glyceride results in a dry powder that is readily scalable and can be mixed with other dry ingredients in a dough. It should be noted that the term "coating" is intended to mean that the fatty acid glyceride is absorbed or partially absorbed into the carrier particle or adsorbed to the carrier particle so as to form a layer of fatty acid glyceride on the outer surface of the carrier particle.

The fatty acid glyceride is typically derived from a vegetable oil such as soybean oil, safflower oil, sunflower oil, sesame oil, peanut oil, rice bran oil, corn oil, babassu nut oil, canola oil, rapeseed oil, cottonseed oil, olive oil, grape kernel oil, palm oil, palm kernel oil, or an animal oil or fat such as fish oil, tallow or lard, or mixtures thereof.

In a currently favoured embodiment, the monoglyceride portion of the fatty acid glyceride comprises 35-55% by weight saturated fatty acid, 30-50% by weight monounsaturated fatty acid and 0-20% by weight polyunsaturated fatty acid. The saturated fatty acid may for instance be selected from palmitic acid, stearic acid, myristic acid, arachidic acid or behenic acid. The monounsaturated acid may for instance be oleic acid. The polyunsaturated acid may for instance be linoleic acid or linolenic acid.

In a particularly preferred embodiment, the present composition is substantially free from trans fatty acids such as glycerol monoelaidate. While trans fatty acids are good starch complexing agents and consequently contribute to crumb softening of bakery products, they are considered to be undesirable in food products for health reasons. However, commercial powdered monoglycerides without trans fatty acids are less effective. By way of contrast, the present composition has been found to provide improved crumb softening and extended shelf life compared to trans-free powdered monoglycerides.

The particulate carrier may suitably be prepared from a material selected from the group consisting of silicon dioxide, sodium silicate, calcium silicate, calcium phosphate, natural or synthetic fibers, proteins, hydrocolloids and starch or starch derivatives.The fibers may suitably be selected from the group consisting of oat fibers, wheat fibers, rice fibers, sugar cane fibers, beet fibers, soy fibers and cellulose fibers such as alpha cellulose. The starch may suitably be selected from the group consisting of tapioca starch, corn starch, wheat starch, potato starch and rice starch. The starch derivative may suitably be maltodextrin.

The most effective carriers for the present purpose have very high specific surface areas while also having a higher bulk density within the specified range and a slightly larger particle size which reduces dustiness. This allows for ease of manufacturing and handling. Thus, the final composition should have good free flow properties without excessive dustiness and excellent resistance to caking or other powder quality problems. A preferred carrier material has a bulk density below 500g/L and a specific surface area in the range of 75-500 m²/g. The average particle size should be substantially below 100 µm to improve the surface area and should not be large enough to result in a gritty texture in the final baked product. A suitable average particle size of the carrier material is below 75 µm.

The composition of the invention may contain other minor ingredients such as antioxidants to reduce oxidation of the unsaturated monoglycerides present. The antioxidant may suitably be selected from the group consisting of α-tocopherol, tertiary butyl hydroquinone, propyl gallate, butylhydroxy toluene, butylhydroxy anisole, ascorbic acid, citric acid, rosemary extract and green tea extract.

The present composition may be prepared by a process comprising
(a) melting the fatty acid glyceride;
(b) spraying the melted fatty acid glyceride onto the particles of the carrier material;
(c) cooling, resulting in a free-flowing powder.

In another embodiment of the invention, the process optionally includes a step of spray chilling the fatty acid glyceride before step (b).

In another aspect, the invention relates to a dry bakery pre-mix comprising
(a) a composition as described herein comprising particles of a carrier coated with a fatty acid glyceride,
(b) one or more enzymes in powder form, and
(c) optionally one or more hydrocolloids and/or one or more dough conditioners and/or one or more antimicrobial agents.

In an embodiment, the dough conditioners may be selected from the group consisting of ascorbic acid, L-cysteine, azodicarbonamide, potassium iodate and potassium bromate.

Enzymes are frequently added to dough to improve the properties of the bread or other baked goods made from the dough. The enzymes may suitably be selected from the group consisting of amylases, xylanases, hexose oxidases, glucose oxidases, maltogenic amylases, lipases, phospholipases, maltotetrahydrolases, transglutaminases and lipoxygenases and mixtures thereof. In a specific embodiment, a mixture of lipase, α-amylase, xylanase and hexose oxidase may be added to the pre-mix. Such an enzyme mixture is available from DuPont Danisco under the trade name POWERBake 2550.

Hydrocolloids are frequently added to dough to improve the properties of the baked goods made from the dough by interacting with gluten resulting in a stronger protein network. In addition, hydrocolloids help to retain water in baked goods resulting in increased moistness and shelf life. The hydrocolloid may suitably be selected from the group consisting of guar gum, carboxymethyl cellulose, methyl cellulose, sodium alginate, carrageenan, pectin, hydroxypropyl methylcellulose, locust bean gum and gellan gum.

In an embodiment, the antimicrobial agent may be selected from the group consisting of calcium propionate, potassium sorbate, vinegar and microbial fermentates.

The concentration of composition (a) is 0.05-99.9% by weight of the pre-mix.

In a still further aspect, the invention relates to a dough comprising cereal flour, a leavening agent, the bakery pre-mix described above and water. The dough may further comprise one or more ingredients selected from salt, flavourings, acidifiers, shortening, whole grain cereals, seeds, kernels, dried fruit, hydrocolloids, fats, sugars, anti-staling agents, softening agents and antioxidants.

The cereal flour in the pre-mix may conveniently be selected from wheat, maize (corn), rye, rice, oats, barley or sorghum flour or a mixture thereof.

The leavening agent may be a chemical leavening agent, e.g. sodium bicarbonate, or a yeast culture such as a culture of *Saccharomyces cerevisiae* (baker's yeast).

In a still further aspect, the invention relates to a process for making a bakery product, the process comprising the steps of
a. mixing a dough from a cereal flour, a leavening agent, a composition as described herein comprising particles of a carrier coated with a fatty acid glyceride, water and optionally one or more ingredients selected from salt, flavourings, acidifiers, shortening, whole grain cereals, seeds, kernels, dried fruit, hydrocolloids, fats, sugars, anti-staling agents, softening agents and antioxidants, and
b. baking the dough.

In an alternative embodiment, the present invention relates to a process for making a bakery product, the process comprising the steps of
c. mixing a dough from a cereal flour, a leavening agent, a baking pre-mix as described herein, water and optionally one or more ingredients selected from salt, flavourings, acidifiers, shortening, whole grain cereals, kernels, dried fruit, hydrocolloids, fats, sugars, anti-staling agents, softening agents and antioxidants, and
d. baking the dough.

In a still further aspect, the invention relates to a bakery product made by baking the dough prepared by either process described above. The bakery product may be selected from bread such as loaves, rolls, buns or flat bread, or pizza bases, pastry, tortillas, cakes, cookies, biscuits, crackers etc. It is also contemplated to use the present composition in non-baked dough products such as pasta as well as in ice cream and other dairy products, in pet food and in desserts and confectionary.

The invention is further described in the examples below.

### EXAMPLES

### Example 1

### Composition comprising oat fiber as carrier coated with monoglyceride

| Ingredient | Percentage (% by weight) |
|---|---|
| HF 200 Oat Fiber | 67 |
| Distilled Monoglyceride with iodine value of 40 | 32.98 |
| Guardian Toco 70 (antioxidant) | .02 |
| Total | 100.00 |

### Process:

1. Add the oat fiber to a high shear mixer such as a ribbon blender with internal chopper blades or hammer mill. Other suitable high shear equipment such as HICIP units or extruders may be used.
2. Melt the distilled monoglyceride to a temperature 5-10°C above the melting point.
3. Add the Guardian Toco 70 to the monoglyceride and mix thoroughly
4. Begin agitating the oat fiber
5. Spray the monoglyceride-tocopherol mixture onto the oat fiber while mixing until homogenous
6. Cool the mixture and package.

The resulting product is a light brown free flowing powder that resists lumping and is easily scalable without dustiness.

### Example 2

### Composition comprising maltodextrin as carrier coated with monoglyceride

| Ingredient | Percentage (%) |
|---|---|
| N-Zorbit maltodextrin | 60 |
| Distilled Monoglyceride with iodine value of 50 | 39.98 |
| Guardian Toco 70 (antioxidant) | .02 |
| Total | 100.00 |

The same process as in Example 1 was used to prepare the composition. The resulting product is very light in color and has a very free flowing quality with good density. The material is easy to handle with minimal dustiness.

### Example 3

### Composition comprising silicon dioxide as carrier coated with monoglyceride

| Ingredient | Percentage (%) |
|---|---|
| Sipernat 340 (silicon dioxide) | 30 |
| Distilled Monoglyceride with iodine value of 45 | 69.98 |
| Guardian Toco 70 (antioxidant) | .02 |
| Total | 100.00 |

The same process as in Example 1 was used to prepare the composition. The resulting product is white in color with good density and very good flow properties. It is also very resistant to bridging or clumping during storage and handling, and has excellent crumb softening properties.

### Example 4

Baking trials with the above materials were conducted. The bakery formula tested was as follows:

### White Pan Bread Formulation

| Ingredient | Trial 1 | Trial 2 | Trial 3 | Trial 4 |
|---|---|---|---|---|
| Wheat Flour | 100 | 100 | 100 | 100 |
| Sugar | 8 | 8 | 8 | 8 |
| Salt | 2 | 2 | 2 | 2 |
| Soy Oil | 2 | 2 | 2 | 2 |
| Panodan 205 (datem) | 0.5 | 0.5 | 0.5 | 0.5 |
| Calcium Propionate | 0.375 | 0.375 | 0.375 | 0.375 |
| Dough conditioning enzyme | 0.1 | 0.1 | 0.1 | 0.1 |
| Ascorbic acid | 0.01 | 0.01 | .01 | .01 |
| Yeast | 4.0 | 4.0 | 4.0 | 4.0 |
| Water | 60 | 60.75 | 60.75 | 60.75 |
| Commercial Hydrated Monoglyceride (23% monoglyceride) | 1.0 | 0 | 0 | 0 |
| Example 3 Composition | 0 | .1875 | .375 | 0.5 |

### Process:

1. Add all ingredients to dough mixer and mix 2 minutes on low speed and 13 minutes on medium speed to complete dough development
2. Dough temperature of 80 F
3. Divide and round dough into 25.5 oz piece
4. Sheet and mold dough into cylinders and place in pan
5. Proof dough for one hour at 105 F and 75% humidity
6. Bake at 400 F for 23 minutes to internal temperature of 200 F
7. Cool one hour before bagging

The baked bread was stored at room temperature for various time points before doing texture analysis using a TAXT2 texture analyzer on days 2, 6, 8 and 10. The 8 centermost slices of two loaves were tested in sets of two with the centermost slice facing up. Testing was done using a 35 mm metal probe.

Results are shown in Fig. 1. The y axis represents the amount of force (in grams) required to compress the bread crumb using the TAXT2 robotic arm. The product of Example 3 outperformed the control at all test levels in both softness and resilience. By day 8, the 3 and 8 oz levels were about 100 points softer than the control. The 6 oz level was about 150 points softer at day 10. The composition of Example 3 also resulted in significantly higher resilience than the control at the 3 oz level.

### Example 5

Another baking trial was conducted comparing the product of Example 3 to standard commercial monoglycerides used for softening of baked goods. Dimodan HS 150 is a distilled monoglyceride made from fully hydrogenated soybean oil. As appears from Fig. 2, the product of Example 3 produced much softer bread on day 1 and day 3 with a difference of almost 100 grams of force when used in equal amounts.

### Example 6

In a third bakery trial the same formula and process was used as in the first trial. Dimodan HS 150 was again tested as well as Dimodan PH 300 which is a powdered dispersible monoglyceride containing trans fatty acids. In this trial both the Dimodan HS 150 and Dimodan PH 300 were similar or even firmer as compared to the control containing no monoglyceride. As appears from Fig. 3, the product of Example 3 was as much as 150 grams of force softer on day 1 and as much as 200 grams of force softer than both commercial monoglycerides on day 3. All other bread attributes were similar.

### Example 7

### Composition comprising silicon dioxide blended with pre-crystallized monoglyceride.

| Ingredient | Percentage (% by weight) |
|---|---|
| Sipernat 340 silicon dioxide | 15 |
| Distilled Monoglyceride with iodine value of 40 | 84.98 |
| Guardian Toco 70 (antioxidant) | .02 |
| Total | 100.00 |

In this example a slightly different process is used for production. In this case, the monoglyceride is spray-chilled in a manner well known to those skilled in the art. The process involves atomizing the molten monoglyceride via a spinning disc atomizer inside a traditional spray chilling tower. As the monoglyceride is sprayed into the tower, the silicon dioxide is simultaneously metered into the tower via the agglomeration unit or other accurate metering device. The crystalline monoglyceride and silicon dioxide are mixed via air currents in the tower and collected at the base of tower. The product is then packaged via standard packaging equipment. The material produced via this process is a very free flowing powder that is highly resistant to caking or bridging and requires less silicon dioxide as flow agent.

The material produced in Example 7 is a highly functional baking ingredient. A baking trial was conducted using Example 7 according to the formulation below:

| | Percentage of Ingredients Added | | | |
|---|---|---|---|---|
| | Control | 0.8% 44% Monoglyceride Hydrate | Example 7 (0.2%) | Example 7 (0.25%) |
| Ingredient | | | | |
| White Flour | 100 | 100 | 100 | 100 |
| Sugar | 8 | 8 | 8 | 8 |
| Salt | 2 | 2 | 2 | 2 |
| Oil | 2 | 2 | 2 | 2 |
| Dimodan HS 150 | 0.5 | 0 | 0 | 0 |
| Ascorbic Acid | 0.01 | 0.01 | 0.01 | 0.01 |
| Panodan 205 datem | 0.5 | 0.5 | 0.5 | 0.5 |
| SureBake 800 (dough conditioner) | 0.01 | 0.01 | 0.01 | 0.01 |
| Calcium Propionate | 0.35 | 0.35 | 0.35 | 0.35 |
| Compressed Yeast | 4 | 4 | 4 | 4 |
| Ice Water | 60.5 | 60 | 60.5 | 60.5 |
| Example 7 | 0 | 0 | 0.2 | 0.25 |
| 44% Monoglyceride Hydrate | 0 | 0.8 | 0 | 0 |

The results of the bakery trial are shown in Figure 4. The powdered Dimodan HS 150 produced firmer bread than the hydrated monoglyceride. The product of Example 7 at 0.2% and 0.25% produced slightly softer bread on day 1 and much softer bread on day 4 as compared to the hydrated monoglyceride. This degree of difference is easily noticeable organoleptically.

## Claims

1. A composition in the form of a dry powder comprising particles of a carrier material coated with a fatty acid glyceride comprising 30-100% by weight of monoglyceride of an iodine value in the range of 30-120, wherein the fatty acid glyceride comprises 50-90% by weight of the composition.

2. A composition according to claim 1, wherein the fatty acid glyceride comprises 45-97% by weight of monoglyceride.

3. A composition according to any one of claims 1-2, wherein said monoglyceride is of an iodine value in the range of 40-60.

4. A composition according to any one of claims 1-3, wherein the fatty acid glyceride is derived from a vegetable oil such as soybean oil, safflower oil, sunflower oil, sesame oil, peanut oil, rice bran oil, corn oil, babassu nut oil, canola oil, rapeseed oil, cottonseed oil, olive oil, grape kernel oil, palm oil, palm kernel oil, or an animal oil or fat such as fish oil, tallow or lard, or mixtures thereof.

5. A composition according to any one of claims 1-4, wherein the saturated fatty acid comprises 30% - 70% of palmitic acid and the remaining saturated fatty acids are stearic acid, myristic acid, arachidic acid and / or behenic acid.

6. A composition according to any one of claims 1-5, wherein the carrier material is selected from the group consisting of silicon dioxide, sodium silicate, calcium silicate, calcium phosphate, natural or synthetic fibers, proteins, hydrocolloids and starch or starch derivatives.

7. A composition according to claim 6, wherein the fibers are selected from the group consisting of oat fibers, wheat fibers, rice fibers, sugar cane fibers, beet fibers, soy fibers and cellulose fibers such as alpha cellulose.

8. A composition according to claim 6, wherein the starch is selected from the group consisting of tapioca starch, corn starch, wheat starch, potato starch, rice starch and starch derivatives as maltodextrin.

9. A composition according to any one of claims 1-8, wherein the carrier material has an average particle size below 100 µm, a bulk density below 500g/L and a specific surface area in the range of 75-500 m²/g.

10. A composition according to any one of claims 1-9 further comprising an antioxidant selected from the group consisting of α-tocopherol, tertiary butyl hydroquinone, propyl gallate, butylhydroxy toluene, butylhydroxy anisole, ascorbic acid, citric acid, rosemary extract and green tea extract.

11. A dry bakery pre-mix comprising
(a) a composition according to any one of claims 1-10 in a concentration of 0.05-99.9% by weight of the pre-mix,
(b) one or more enzymes in powder form selected from the group consisting of amylases, xylanases, hexose oxidases, glucose oxidases, maltogenic amylases, lipases, phospholipases, maltotetrahydrolases, transglutaminases and lipoxygenases and mixtures thereof, and
(c) optionally one or more hydrocolloids and/or one or more dough conditioners and/or one or more antimicrobial agents.

12. A bakery pre-mix according to claim 11, wherein the dough conditioner is selected from the group consisting of ascorbic acid, L-cysteine, azodicarbonamide, potassium iodate and potassium bromate.

13. A bakery pre-mix according to claim 11, wherein the hydrocolloid is selected from the group consisting of guar gum, carboxymethyl cellulose, methyl cellulose, sodium alginate, carrageenan, pectin, hydroxypropyl methylcellulose, locust bean gum and gellan gum.

14. A bakery pre-mix according to claim 11, wherein the antimicrobial agent is selected from the group consisting of calcium propionate, potassium sorbate, vinegar and microbial fermentates.

15. A dough comprising cereal flour, water, a leavening agent and the bakery pre-mix according to any one of claims 11-14.

16. A process for making the composition described in claims 1-10, the process comprising:
(a) melting the fatty acid glyceride;
(b) spraying the melted fatty acid glyceride onto the particles of the carrier material;
(c) cooling, resulting in a free-flowing powder.

17. Process, according to claim 16, **characterized by** optionally having a step of spray chilling the fatty acid glyceride before step (b).

## Patentansprüche

1. Zusammensetzung in Form eines trockenen Pulvers umfassend Teilchen eines Trägermaterials, die mit einem Fettsäureglycerid beschichtet sind, das 30 bis 100 Gew.-% Monoglycerid eines Jodwerts im Bereich von 30 bis 120 umfasst, wobei das Fettsäureglycerid 50 bis 90 Gew.-% der Zusammensetzung umfasst.

2. Zusammensetzung nach Anspruch 1, wobei das Fettsäureglycerid 45 bis 97 Gew.-% Monoglycerid umfasst.

3. Zusammensetzung nach einem der Ansprüche 1 bis 2, wobei das Monoglycerid einen Jodwert im Bereich von 40 bis 60 aufweist.

4. Zusammensetzung nach einem der Ansprüche 1 bis 3, wobei das Fettsäureglycerid von einem Pflanzenöl wie Sojabohnenöl, Safloröl, Sonnenblumenöl, Sesamöl, Erdnussöl, Reiskleieöl, Maisöl, Babassunussöl, Canolaöl, Rapsöl, Baumwollsamenöl, Olivenöl, Traubenkernöl, Palmöl, Palmkernöl oder einem tierischen Öl oder Fett wie Fischöl, Talg oder Schmalz oder Mischungen davon abgeleitet ist.

5. Zusammensetzung nach einem der Ansprüche 1 bis 4, wobei die gesättigte Fettsäure 30 % bis 70 % Palmitinsäure umfasst und die verbleibenden gesättigten Fettsäuren Stearinsäure, Myristinsäure, Arachinsäure und/oder Behensäure sind.

6. Zusammensetzung nach einem der Ansprüche 1 bis 5, wobei das Trägermaterial aus der Gruppe ausgewählt ist bestehend aus Siliciumdioxid, Natriumsilicat, Calciumsilicat, Calciumphosphat, Natur- oder Synthesefasern, Proteinen, Hydrokolloiden und Stärke oder Stärkederivaten.

7. Zusammensetzung nach Anspruch 6, wobei die Fasern aus der Gruppe ausgewählt sind bestehend aus Haferfasern, Weizenfasern, Reisfasern, Zuckerrohrfasern, Rotrübefasern, Sojafasern und Cellulosefasern wie Alpha-Cellulose.

8. Zusammensetzung nach Anspruch 6, wobei die Stärke aus der Gruppe ausgewählt ist bestehend aus Tapiokastärke, Maisstärke, Weizenstärke, Kartoffelstärke, Reisstärke und Stärkederivaten wie Maltodextrin.

9. Zusammensetzung nach einem der Ansprüche 1 bis 8, wobei das Trägermaterial eine durchschnittliche Teilchengröße unter 100 µm, eine Schüttdichte unter 500 g/l und einen spezifischen Oberflächenbereich im Bereich von 75 bis 500 m²/g aufweist.

10. Zusammensetzung nach einem der Ansprüche 1 bis 9, ferner ein Antioxidationsmittel umfassend ausgewählt aus der Gruppe bestehend aus α-Tocopherol, tertiärem Butylhydrochinon, Propylgallat, Butylhydroxytoluol, Butylhydroxyanisol, Ascorbinsäure, Zitronensäure, Rosmarinextrakt und Extrakt von grünem Tee.

11. Trockene Backwarenvormischung umfassend
(a) eine Zusammensetzung nach einem der Ansprüche 1 bis 10 in einer Konzentration von 0,05 bis 99,9 Gew.-% der Vormischung,
(b) ein oder mehrere Enzyme in Pulverform ausgewählt aus der Gruppe bestehend aus Amylasen, Xylanasen, Hexoseoxidasen, Glukoseoxidasen, maltogenen Amylasen, Lipasen, Phospholipasen, Maltotetrahydrolasen, Transglutaminasen und Lipoxygenasen und Mischungen davon und
(c) wahlweise ein oder mehrere Hydrokolloide und/oder ein oder mehrere Teigkonditioniermittel und/oder ein oder mehrere antimikrobielle Mittel.

12. Backwarenvormischung nach Anspruch 11, wobei das Teigkonditioniermittel aus der Gruppe ausgewählt ist bestehend aus Ascorbinsäure, L-Cystein, Azodicarbonamid, Kaliumiodat und Kaliumbromat.

13. Backwarenvormischung nach Anspruch 11, wobei das Hydrokolloid aus der Gruppe ausgewählt ist bestehend aus Guargummi, Carboxymethylcellulose, Methylcellulose, Natriumalginat, Carrageen, Pektin, Hydroxypropylmethylcellulose, Johannisbrotkernmehl und Gellangummi.

14. Backwarenvormischung nach Anspruch 11, wobei das antimikrobielle Mittel aus der Gruppe ausgewählt ist bestehend aus Calciumpropionat, Kaliumsorbat, Essig und mikrobiellen Fermentaten.

15. Teig umfassend Getreidemehl, Wasser, ein Treibmittel und die Backwarenvormischung nach einem der Ansprüche 11 bis 14.

16. Verfahren zum Herstellen der in den Ansprüchen 1 bis 10 beschriebenen Zusammensetzung, wobei das Verfahren Folgendes umfasst:
(a) Schmelzen des Fettsäureglycerids;
(b) Spritzen des geschmolzenen Fettsäureglycerids auf die Teilchen des Trägermaterials;
(c) Kühlen, das zu einem freifließenden Pulver führt.

17. Verfahren nach Anspruch 16, **dadurch gekennzeichnet, dass** es wahlweise einen Schritt des Spritzabkühlens des Fettsäureglycerids vor Schritt (b) aufweist.

## Revendications

1. Composition se présentant sous la forme d'une poudre sèche comprenant des particules d'un matériau support revêtu d'un glycéride d'acide gras comprenant de 30 à 100 % en poids de monoglycéride d'un indice d'iode situé dans la plage de 30 à 120, dans laquelle le glycéride d'acide gras comprend de 50 à 90 % en poids de la composition.

2. Composition selon la revendication 1, dans laquelle le glycéride d'acide gras comprend de 45 à 97 % en poids de monoglycéride.

3. Composition selon l'une quelconque des revendications 1 à 2, dans laquelle ledit monoglycéride présente un indice d'iode situé dans la plage de 40 à 60.

4. Composition selon l'une quelconque des revendications 1 à 3, dans laquelle le glycéride d'acide gras est dérivé d'une huile végétale telle que l'huile de soja, l'huile de carthame, l'huile de tournesol, l'huile de sésame, l'huile d'arachide, l'huile de son de riz, l'huile de maïs, l'huile de noix de babassou, l'huile de canola, l'huile de colza, l'huile de graines de coton, l'huile d'olive, l'huile de pépins de raisin, l'huile de palme, l'huile de palmiste, ou une huile ou une graisse d'origine animale telle que de l'huile de poisson, du tallöl ou du lard, ou des mélanges de ceux-ci.

5. Composition selon l'une quelconque des revendications 1 à 4, dans laquelle l'acide gras saturé comprend de 30 % à 70 % d'acide palmitique et les acides gras saturés restants sont l'acide stéarique, l'acide myristique, l'acide arachidique et/ou l'acide béhénique.

6. Composition selon l'une quelconque des revendications 1 à 5, dans laquelle le matériau support est sélectionné dans le groupe constitué du dioxyde de silicium, du silicate de sodium, du silicate de calcium, du phosphate de calcium, des fibres d'origine naturelle ou synthétiques, des protéines, des hydrocolloïdes et de l'amidon ou des dérivés d'amidon.

7. Composition selon la revendication 6, dans laquelle les fibres sont sélectionnées dans le groupe constitué des fibres d'avoine, des fibres de blé, des fibres de riz, des fibres de canne à sucre, des fibres de betterave, des fibres de soja et des fibres de cellulose telle que l'alpha cellulose.

8. Composition selon la revendication 6, dans laquelle l'amidon est sélectionné dans le groupe constitué de l'amidon de tapioca, de l'amidon de maïs, de l'amidon de blé, de l'amidon de pomme de terre, de l'amidon de riz et des dérivés d'amidon tels que la maltodextrine.

9. Composition selon l'une quelconque des revendications 1 à 8, dans laquelle le matériau support présente une taille moyenne de particule inférieure à 100 µm, une densité en vrac inférieure à 500 g/l et une surface spécifique située dans la plage de 75 à 500 m²/g.

10. Composition selon l'une quelconque des revendications 1 à 9 comprenant en outre un agent antioxydant sélectionné dans le groupe constitué de l'a-tocophérol, de la butyl hydroquinone tertiaire, du gallate de propyle, du butylhydroxy toluène, du butylhydroxy anisole, de l'acide ascorbique, de l'acide citrique, de l'extrait de romarin et de l'extrait de thé vert.

11. Pré-mélange sec de boulangerie comprenant
(a) une composition selon l'une quelconque des revendications 1 à 10 sous une concentration de 0,05 à 99,9 % en poids du pré-mélange,
(b) une ou plusieurs enzymes sous une forme de poudre sélectionnées dans le groupe constitué des amylases, xylanases, hexose oxydases, glucose oxydases, amylases maltogènes, lipases, phospholipases, maltotétrahydrolases, transglutaminases et lipoxygénases et de mélanges de celles-ci, et
(c) facultativement un ou plusieurs hydrocolloïdes et/ou un ou plusieurs conditionneurs de pâte et/ou un ou plusieurs agents antimicrobiens.

12. Pré-mélange de boulangerie selon la revendication 11, dans lequel le conditionneur de pâte est sélectionné dans le groupe constitué de l'acide ascorbique, de la L-cystéine, de l'azodicarbonamide, de l'iodate de potassium et du bromate de potassium.

13. Pré-mélange de boulangerie selon la revendication 11, dans lequel l'hydrocolloïde est sélectionné dans le groupe constitué de la gomme de guar, de la carboxyméthyl cellulose, de la méthyl cellulose, de l'alginate de sodium, de la carraghénane, de la pectine, de l'hydroxypropyl méthylcellulose, de la gomme de caroube et de la gomme de gellane.

14. Pré-mélange de boulangerie selon la revendication 11, dans lequel l'agent antimicrobien est sélectionné dans le groupe constitué du propionate de calcium, du sorbate de potassium, du vinaigre et de fermentats microbiens.

15. Pâte comprenant de la farine de céréales, de l'eau, un agent levant et le pré-mélange de boulangerie selon l'une quelconque des revendications 11 à 14.

16. Procédé de fabrication de la composition décrite selon les revendications 1 à 10, le procédé comprenant :
(a) la fusion du glycéride d'acide gras ;
(b) la pulvérisation du glycéride d'acide gras fondu sur les particules du matériau support ;
(c) le refroidissement, résultant en une poudre à écoulement libre.

17. Procédé, selon la revendication 16, **caractérisé en ce qu'**il présente facultativement une étape de refroidissement par pulvérisation du glycéride d'acide gras avant l'étape (b).
